Europäisches Patentamt

European Patent Office

Office européen des brevets

(19)

(11) Numéro de publication : **0 421 858 B1**

(12)

# FASCICULE DE BREVET EUROPEEN

(45) Date de publication du fascicule du brevet :
**19.05.93 Bulletin 93/20**

(51) Int. Cl.⁵ : **G01M 3/10**

(21) Numéro de dépôt : **90402708.3**

(22) Date de dépôt : **01.10.90**

(54) **Procédé et dispositif de test d'étanchéité d'un boîtier.**

(30) Priorité : **03.10.89 FR 8912893**

(43) Date de publication de la demande :
**10.04.91 Bulletin 91/15**

(45) Mention de la délivrance du brevet :
**19.05.93 Bulletin 93/20**

(84) Etats contractants désignés :
**DE GB IT**

(56) Documents cités :
**US-A- 3 590 256**
**PATENT ABSTRACTS OF JAPAN, vol. 7, no. 30**
**(P-173)[1175], 5 février 1983; & JP-A-57 182 630**
**(KASHIWA KAGAKU KOGYO K.K.) 10-11-1982**

(73) Titulaire : **THOMSON-CSF**
**51, Esplanade du Général de Gaulle**
**F-92800 Puteaux (FR)**

(72) Inventeur : **Deleuze, Gilles**
**THOMSON-CSF, SCPI, Cédex 67**
**F-92045 Paris la Défense (FR)**
Inventeur : **Boisde, Jean-Claude**
**THOMSON-CSF, SCPI, Cédex 67**
**F-92045 Paris la Défense (FR)**
Inventeur : **Brizoux, Michel**
**THOMSON-CSF, SCPI, Cédex 67**
**F-92045 Paris la Défense (FR)**
Inventeur : **Lerose, Saverio**
**THOMSON-CSF, SCPI, Cédex 67**
**F-92045 Paris la Défense (FR)**

(74) Mandataire : **Guérin, Michel et al**
**THOMSON-CSF, SCPI, B.P. 329, 50, rue**
**Jean-Pierre Timbaud**
**F-92402 Courbevoie Cédex (FR)**

Jouve, 18, rue Saint-Denis, 75001 PARIS

## Description

L'invention concerne un procédé de test d'étanchéité de boîtier et un dispositif de test d'étanchéité mettant en oeuvre ce procédé.

Cet appareil permet de mesurer de façon quantitative le taux de fuite d'un boîtier afin d'éprouver son étanchéité, son herméticité, son intégrité.

Il a été conçu pour le problème suivant, mais peut s'appliquer à des sujets variés : le problème de départ était de quantifier par une méthode simple et rapide, non destructive, le taux de fuite de boîtiers à grande cavité ne résistant pas à la surpression requise par un test à l'Hélium.

On connaît dans la technique deux familles de méthodes normalisées .

a) Test de fuite fine à l'Hélium (présenté par exemple dans le MILSTD883C, méthode 1014 diffusée par NAVAL PUBLICATION AND FORMS CENTER, PHILADELPHIA - USA) et ses variantes (test au fluorocarbone, au krypton MILSTD883C, Méthode 1014).

Ce type de test à l'Hélium présente les avantages suivants :
- il donne une valeur quantitative,
- il est précis,
- il est fiable jusqu'aux faibles taux de fuite (0,101.$10^{-9}$ Pa.m$^3$/s soit $10^{-9}$ atmcm$^3$/s),
- il fonctionne sur des petits boîtiers dits hermétiques,
- il permet une mesure par batch.

Cependant un test à l'Hélium présente les inconvénients suivants :
- mise sous pression forte des boîtiers,
- nécessité d'un préconditionnement préalable,
- tous les matériaux ne réagissent pas de la même manière avec l'air et l'Hélium.

b) Test des bulles (présentée par exemple dans le MILSTD883C, méthode 1014) et une variante quantitative présentée dans la norme CEI n° 68-217 publiée par le Bureau Central de la Commission Electrotechnique Internationale (1 rue de Varembé, Genève, Suisse).

Ces tests des bulles présentent les avantages d'être simples et rapides. Cependant, ils sont :
- imprécis,
- soumis à l'influence de l'interprétation d'un opérateur,
- sensibles aux perturbations extérieures,
- limités à des taux de fuite supérieurs à $10^{-5}$,
- et pour certains, nécessitent une remise à zéro entre deux mesures.

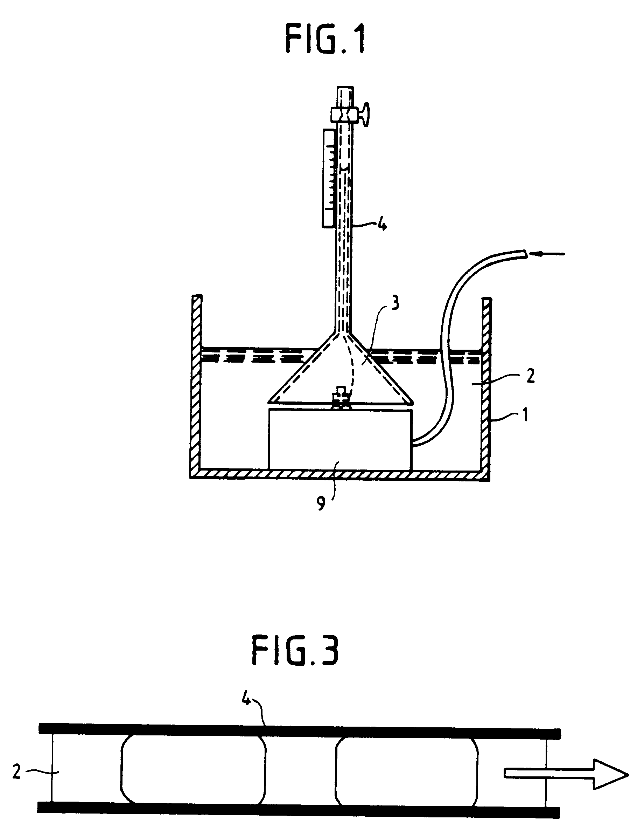

La figure 1 représente un dispositif de test connu dans la technique et publié dans la norme CEI cité précédemment. Ce dispositif comporte une cuve 1 contenant un liquide 2 dans lequel est immergé un boîtier au-dessus duquel se trouver un entonnoir 3 en contact avec le liquide. L'entonnoir 3 est surmonté d'un tube 4 dans lequel remonte le liquide. Lorsque les bulles sortent du boîtier 9, elles montent dans l'entonnoir 3 et le tube 4 et font baisser le niveau de liquide dans le tube 4. Une échelle graduée permet de mesurer le volume des bulles qui sont sorties du boîtier 9. Ce dispositif présente les inconvénients suivants :
- l'entonnoir doit être à un niveau constant par rapport au niveau du liquide de la cuve,
- les bulles finissent par ne plus remonter jusqu'en haut du tube 4,
- le dispositif est sensible à la température du liquide et à la température extérieure,
- la lecture est difficile à faire
- une remise à zéro est nécessaire.

Le test de l'invention présente les avantages suivants par rapport aux méthodes citées :

| PAR RAPPORT AU TEST HELIUM (MILSTD833C) | PAR RAPPORT AU TEST DES BULLES | |
| --- | --- | --- |
| | Version MILSTD833C | Version CEI |
| . pas de précondi-tionnement préalable | . quantitatif<br>. pas d'influence de l'opérateur sur la mesure | . pas d'influence de l'opérateur sur la mesure |
| . pas de surpression forte obligatoire sur les boîtiers testés ==> applicable à de gros boîtiers | .va au moins jusqu'à $0,101.10^{-7}$ Pa.m$^3$/s ($10^{-7}$ atmcm$^3$/s) | .va au moins jusqu'à $0,101.10^{-7}$ Pa.m$^3$/s ($10^{-7}$ atmcm$^3$/s) |
| . on mesure directement un taux de fuite d'air | . précis | . précis |
| . simplicité d'emploi | | . le fait de mesurer le gaz dégagé dans un fluide en circulation évite les perturbations ==> précis<br>. pas de RAZ entre 2 manipulations |

On connaît également un dispositif tel que décrit dans le document : Patent Abstract of Japan, vol 7, n° 30, p 173 (1175) & JP-A-57- 182 630 selon lequel un entonnoir collecte les bulles émises par un boîtier à tester immergé dans un liquide. Un tube capillaire permet d'aspirer le liquide et les bulles. Un dispositif de mesure électrique permet de détecter les passages des bulles. Cependant, ce dispositif permet de compter uniquement les bulles.

L'invention concerne donc un procédé de test d'étanchéité d'un boîtier, comportant les différentes étapes suivantes :

- immersion du boîtier dans une cuve de liquide ;
- aspiration du liquide de la cuve ainsi que des bulles s'échappant du boîtier et circulation de ce liquide et de ces bulles dans un tube de section déterminée ;

caractérisé en ce qu'il comporte également les étapes suivantes :

- mesure des instants de passage des fronts avant et arrière de chaque bulle en un point du tube ;
- mesure de la vitesse des bulles véhiculées par le fluide ;
- détermination du volume de chaque bulle à l'aide de ces instants de passage et de la vitesse des bulles.

De préférence, ce procédé prévoit la mesure de vitesse des bulles par la mesure des instants de passage d'une bulle en deux points différents du tube.

L'invention concerne également un dispositif de test d'étanchéité d'un boîtier pour la mise en oeuvre du procédé comportant une cuve contenant un liquide et dans lequel est immergé le boîtier à tester, une hotte possédant une grande ouverture d'aspiration en contact, au moins, avec la surface du liquide, et dont la surface d'aspiration est au moins égale à la projection sur la surface du liquide du boîtier à tester, de façon que toute bulle d'air ou de gaz sortant du boîtier soit captée par la hotte, caractérisé en ce que la hotte possède une ouverture de sortie reliée à un tube d'une section déterminée lequel est muni de moyens permettant d'aspirer le liquide de la cuve, le dispositif comprenant :

- en outre au moins un premier capteur disposé le long du tube et permettant de détecter les instants de passage du front avant et du front arrière de chaque bulle ;
- des moyens de mesure de vitesse des bulles dans le tube ;
- un circuit de traitement connecté au capteur recevant de celui-ci des informations caractérisant les instants de passage du front avant et du front arrière de chaque bulle, et connecté également aux moyens de mesure de vitesse des bulles et recevant de ceux-ci une information de vitesse de bulle, et déterminant, à partir de ces instants de passage, et de la vitesse de bulle, le volume de chaque bulle.

Dans ce dispositif les moyens de mesure de vitesse des bulles comportent avantageusement au moins un deuxième capteur détectant l'instant de passage du front avant ou du front arrière de chaque bulle.

De plus, dans ce dispositif les deux capteurs sont avantageusement séparés d'une distance déterminée.

Il peut être également prévu un troisième capteur détectant l'instant de passage du front avant ou arrière de chaque bulle et qui assure avec le deuxième capteur le rôle de mesure de la vitesse de chaque bulle.

Les différents objets et caractéristiques de l'invention apparaîtront plus clairement dans la description qui va suivre faite à titre d'exemple en se reportant aux figures annexées qui représentent :

- la figure 1, un exemple de dispositif connu dans la technique ;
- la figure 2, un exemple de réalisation du dispositif de l'invention ;
- la figure 3, un exemple de forme de bulles dans le tube capillaire du dispositif de la figure 2 ;
- les figures 4 à 8, des fonctionnements détaillés du dispositif de la figure 3 ;
- la figure 9, une variante de réalisation du dispositif de test de l'invention ;
- la figure 10, un exemple de réalisation du circuit de traitement du dispositif de test de l'invention.

Le procédé de base permettant à l'appareil d'apporter les avantages présentés précédemment est basé sur la mesure du volume d'un gaz dégagé dans un fluide en circulation dans un tube capillaire.

Avantageusement, le gaz est dégagé par une surpression créée dans le boîtier (ou module, ou emballage) en chauffant celui-ci, par exemple en plaçant celui-ci dans un fluide de température supérieure à sa température initiale. La surpression exigée est faible (par exemple 100 à 300 mbars suffisent).

Le gaz est le gaz présent initialement dans le boîtier testé. Il s'agit en général d'air.

On maintient une circulation dans le fluide porteur afin de n'avoir à mesurer que le volume dégagé, sans avoir besoin de connaître le volume initial ou le volume final. Ceci évite des imprécisions, ce qui fournit un bon rapport signal/bruit.

Le capillaire permet de regrouper et isoler le volume dégagé sous forme de bulles. La mesure de volume se ramène alors à une mesure de temps ceci augmente la fiabilité et la précision de la mesure.

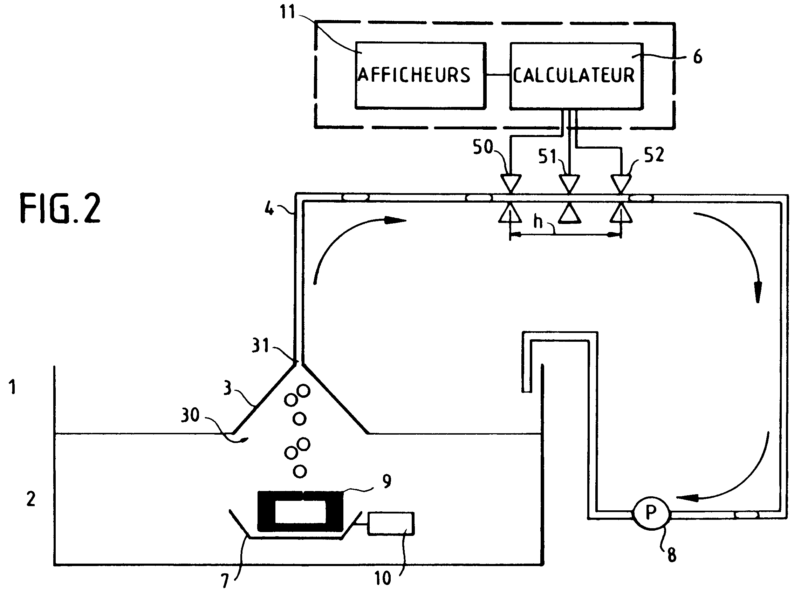

En se reportant à la figure 2, on va décrire un exemple de réalisation du dispositif de test d'étanchéité selon l'invention. Ce dispositif comporte :

- une cuve 1 qui doit être conçue pour résister à la température de service du test et être assez grande pour contenir un ou plusieurs boîtiers à tester.
- un liquide 2 placé dans la cuve 1. La fonction de ce liquide est de servir de vecteur au gaz s'échappant des boîtiers à tester et également de chauffer les boîtiers. Ce liquide peut être du fluorocarbone, de l'huile, de l'eau, etc. La température que doit supporter le liquide 2 dépend de la surpression que l'on veut créer dans le boîtier ;
- un entonnoir 3 servant de hotte d'aspiration et dont la base 30 du cône de l'entonnoir dans le liquide 2 (ou est au moins en contact avec le liquide). Le diamètre de la base du cône de l'entonnoir est supérieur aux plus grandes dimensions du boîtier à tester. La base 30 du cône de l'entonnoir sert d'ouverture d'aspiration et l'entonnoir permet ainsi de recueillir les bulles dégagées par le boîtier en raison d'un défaut d'étanchéité de celui-ci ;
- un tube de section constante, et de préférence de section capillaire, est connecté à l'accès 31 de petit diamètre de l'entonnoir. Ce tube, par son diamètre faible, isole les bulles tout en assurant leur circulation ;
- des capteurs 50, 51, 52 qui détectent le passage des bulles dans le tube 4 par détection de la modification des propriétés physiques du fluide circulant le tube. Par exemple, ces capteurs sont des capteurs optiques tels que photocoupleurs ou fibres optiques ... Ils sont répartis le long du tube 4. Chaque fois qu'un capteur détecte une bulle, il transmet un signal. Les capteurs 50 et 52 détectent le front avant de chaque bulle. Le capteur 51 détecte le front avant, puis le front arrière de chaque bulle. Les capteurs 50 et 52 sont séparés d'un distance h ;
- un circuit de traitement 6 qui reçoit les signaux de détection de bulles des capteurs qui traite ces signaux et qui transmet le résultat du traitement à un dispositif d'affichage 11 ;
- un panier de manipulation 7 conçu pour recevoir les boîtiers à tester et permettant de placer les boîtiers sous l'ouverture 30 de l'entonnoir 3. Le panier comporte également un vibreur 10 destiné à faciliter le dégazage du boîtier ;
- une pompe 8, connectée au tube 4, permet d'aspirer le liquide 2 par le tube 4 et l'entonnoir 3. Le rôle de la pompe peut également être assuré par un système de siphon non représenté.

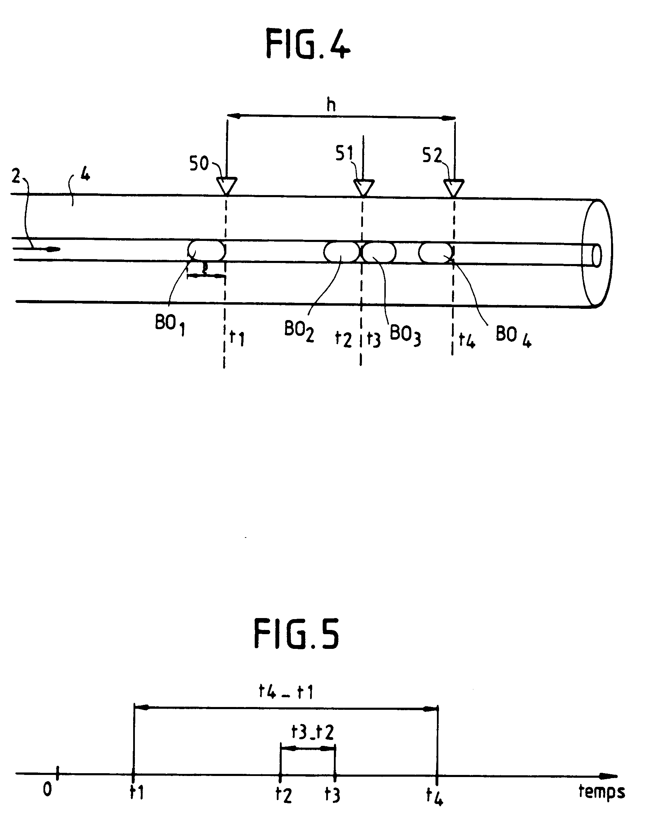

Comme cela est représenté en figure 3, le tube 4 étant un tube capillaire, les bulles véhiculées par le liquide ont une forme allongée, de diamètre constant et dont les fronts avant et arrière sont nettement détectables.

En se reportant aux figures 4 à 8 on va maintenant décrire le fonctionnement du dispositif de l'invention.

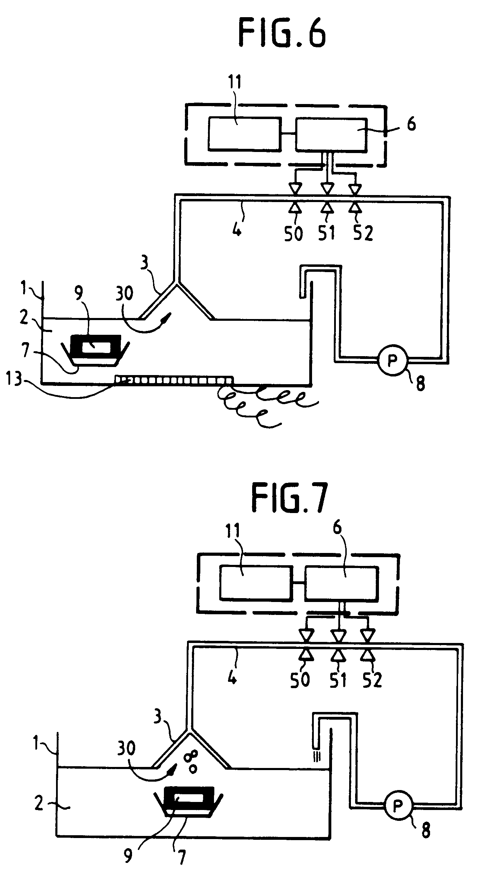

Le boîtier 9 à tester est placé dans le panier 7 comme cela est représenté sur la figure 6. Le boîtier 9 est soumis à un échauffement de façon à provoquer une dilatation du gaz contenu dans le boîtier 9.

Par exemple, on prévoit un moyen de chauffage tel qu'un radiateur de chauffage 13 placé dans le liquide 2 qui porte celui-ci à une température supérieure à la température normale d'utilisation du boîtier 9. Un système thermostatique non représenté sur les figures permet de commander le radiateur 13 et de maintenir le liquide 2 à une température constante.

Le chauffage du liquide 2 peut être obtenu également en plaçant la cuve 1 dans un bain marie porté à une température adaptée.

Ensuite le boîtier 9 est soumis à des vibrations, à l'aide du vibreur 10 par exemple, de façon à dégazer le boîtier, c'est-à-dire à enlever l'air coincé sur ces parois et cela avant que le boîtier soit placé sous l'entonnoir 3.

Comme cela est représenté sur la figure 7, le panier 7 est déplacé dans la cuve 1 de façon que le boîtier 9 soit placé sous l'ouverture d'aspiration 30. En cas de défaut d'étanchéité, les bulles qui s'échappent du boîtier 9 remontent vers l'ouverture d'aspiration 30 de l'entonnoir 3.

Par ailleurs, le système de test étant en fonctionnement, la pompe 8 aspire le liquide 2 de la cuve par l'intermédiaire de l'entonnoir 3 et du tube 4. Les bulles sont donc aspirées dans l'entonnoir 3 et le tube 4.

Les figures 4 et 5 permettent d'expliquer plus précisément le fonctionnement du dispositif de l'invention.

La figure 4 représente le passage d'une bulle déterminée devant les capteurs 50, 51, 52. On a donné à cette bulle des références différentes $BO_1$, $BO_2$, $BO_3$, $BO_4$ pour caractériser quatre positions de la bulle qui nous intéressent dans le cadre de l'invention.

Lorsque la bulle est dans la position $BO_1$, le capteur détecte le front avant de la bulle. Comme cela est représenté sur la figure, cette détection se passe à l'instant t1 et à cet instant les circuits d'utilisation peuvent donc savoir que le capteur 50 a détecté le front avant d'une bulle.

Lorsque la bulle atteint la position $BO_2$ le capteur 51 détecte à son tour le front avant de la bulle. Cette détection correspond à l'instant t2.

Lorsque la bulle atteint la position $BO_3$, le capteur 51 détecte le front arrière de la bulle. Cette détection correspond à l'instant t3.

Enfin, lorsque la bulle atteint la position $BO_4$, le capteur 52 détecte le front avant de la bulle. Cette détection correspond à l'instant t4.

Les informations correspondant à chaque détection précédente sont transmises par les capteurs 50, 51, 52 au circuit de traitement 6 de la figure 1.

Le circuit de traitement 6 connaît alors les différents instants de détection t1, t2, t3, t4 tels qu'ils sont représentés sur les figures 4 et 5.

Il connaît également :
- la distance h séparant les capteurs 50 et 52 ;
- la section intérieure du tube capillaire 4 et en supposant que cette section est circulaire, il connaît le diamètre intérieur d du tube 4.

A partir de la distance h et de la différence des temps t1 et t4 correspondant au temps mis par le front avant de la bulle pour parcourir la distance h séparant les deux capteurs 50 et 52, il détermine la vitesse de la bulle :

$$v = h/(t4 - t1)$$

Le circuit de traitement 6 connaît maintenant la vitesse de la bulle. Il connaît également les instants de détection t2 et t3 correspondant à la détection par le capteur 51 des fronts avant puis arrière de la bulle. Le circuit de traitement 6 détermine alors la longueur I séparant le front avant du front arrière de la bulle à l'aide de la formule :

$$v = I/(t3 - t2)$$

La longueur de la bulle est donc :

$$I = h (t3 - t2)/(t4 - t1)$$

La section du tube 4 étant constante tout au moins entre les capteurs 50 et 52, le circuit de traitement détermine le volume de la bulle en multipliant I par la section intérieure du tube 4. Selon l'exemple d'une section circulaire de diamètre d, le circuit de traitement trouve un volume de bulle :

$$v = h (t3 - t2) ( d^2/4)/(t4 - t1)$$

Durant un temps de mesure fixé à l'avance, le circuit de mesure détermine le volume total de bulles s'échappant du boîtier.

Selon une première méthode, le circuit de traitement compte le nombre N de bulles en comptant le nombre de détections et en multipliant le volume v d'une bulle par le nombre N de bulles. Cela suppose que toutes les bulles ont sensiblement le même volume.

Selon une deuxième méthode, le circuit de traitement additionne les volumes des différentes bulles détectées. Cette méthode est alors plus précise.

Selon une troisième méthode, l'aspiration du liquide 2 de la cuve 1, par l'entonnoir 3 et le tube 4, est arrêtée avant le commencement de la mesure. Le boîtier 9 étant sous l'entonnoir 3, les bulles sont alors stockées dans la partie supérieure de l'entonnoir 3. Lorsqu'on désire mesurer le volume de gaz (ou d'air) qui s'est échappé du boîtier, on remet en marche la circulation du liquide par le tube 4. Du fait du stockage du gaz dans la partie supérieure de l'entonnoir 3, on a alors qu'une seule bulle de volume plus important à mesurer. La mesure du volume de cette bulle se fait comme cela a été décrit précédemment par la détection des fronts avant et arrière de la bulle et par mesure de la vitesse de la bulle. Cette troisième méthode peut présenter l'avantage d'être plus précise, notamment dans le cas des fuites très faibles.

Le circuit de traitement affiche ensuite le volume total des bulles détectées. Cet affichage caractérise l'étanchéité du boîtier et donc l'importance d'une ou plusieurs fuites du boîtier. L'affichage peut également indiquer à l'opérateur le temps de la mesure et le nombre de bulles détectées.

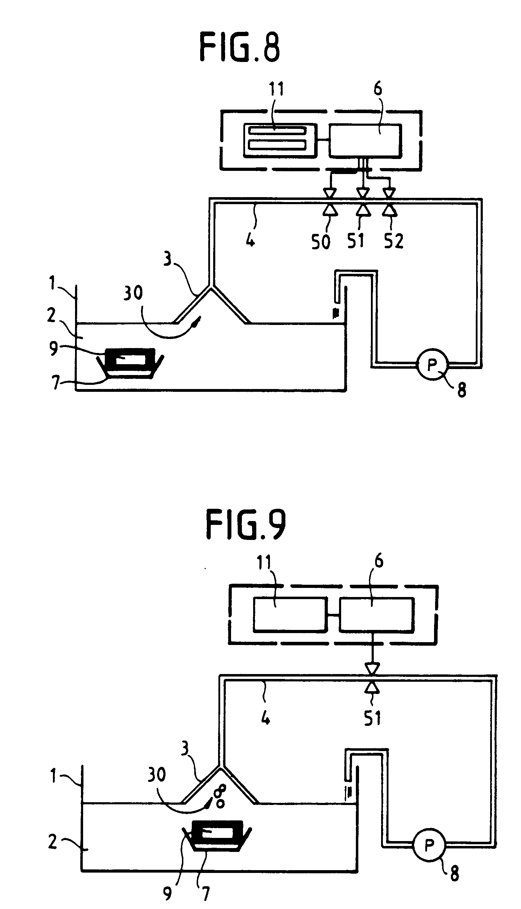

Enfin, à l'issue de la mesure, le panier est déplacé dans la cuve 1 comme cela est représenté sur la figure 8 et le boîtier est retiré de la cuve.

Il est à noter que la mise en température du fluide 2 peut se faire par placement de la cuve 1 dans un bain marie.

Le choix de la température permet le réglage de la surpression à l'intérieur du boîtier (relation $P2/P1=T2/T1$).

Par exemple, pour un boîtier de 200 cm3, initialement à 20°c et à 1 bar de pression interne, une plongée dans le fluide à 120°C créé une suppression de 300 mbars.

De plus, la mesure peut être précédée par une opération de dégazage du boîtier à tester.

La durée de cette phase dépend des caractéristiques géométriques et des matériaux constitutifs du boîtier. Cette phase est en effet destinée à :
- faire partir les bulles coincées dans les cavités de surface du boîtier ;
- faire monter la pression interne par chauffage.

L'usage d'un vibreur 10 sur lequel est monté le panier accélère cette phase. Usuellement, sa durée est d'une minute.

Selon une variante de réalisation de l'invention, non représentée sur les figures, on ne dispose que de deux capteurs, les capteurs 50 et 52 par exemple. La fonction du capteur 51 est assurée alors par l'un des capteurs 50 et 52 qui détecte alors outre le front avant d'une bulle mais aussi son front arrière.

Selon une autre variante simplifiée de réalisation représentée en figure 9 du dispositif de l'invention, on ne prévoit qu'un seul capteur 51. Les capteurs 50 et 52 permettant de mesurer la vitesse des bulles ne sont alors plus prévus.

Par contre le dispositif de test est muni d'une pompe 8 assurant un débit quasi-constant du fluide. La vitesse du fluide est donc donnée par le débit de la pompe et le circuit 6 connaît sensiblement la vitesse des bulles à partir du débit (ou de la vitesse de rotation) de la pompe. Le dispositif peut donner de bons résultats bien qu'il soit tributaire de l'influence des bulles sur le débit du fluide dans le tube 4.

Le dispositif de test de l'invention peut servir à :
- calculer un taux de fuite (cas d'un boîtier à cavité que l'on veut hermétique) ;
- évaluer un manque d'intégrité (cas d'un boîtier présentant une fissure ouverte). L'ampleur du manque d'intégrité est donné par le volume dégagé.

Dans tous les cas, la procédure suivie est la même.

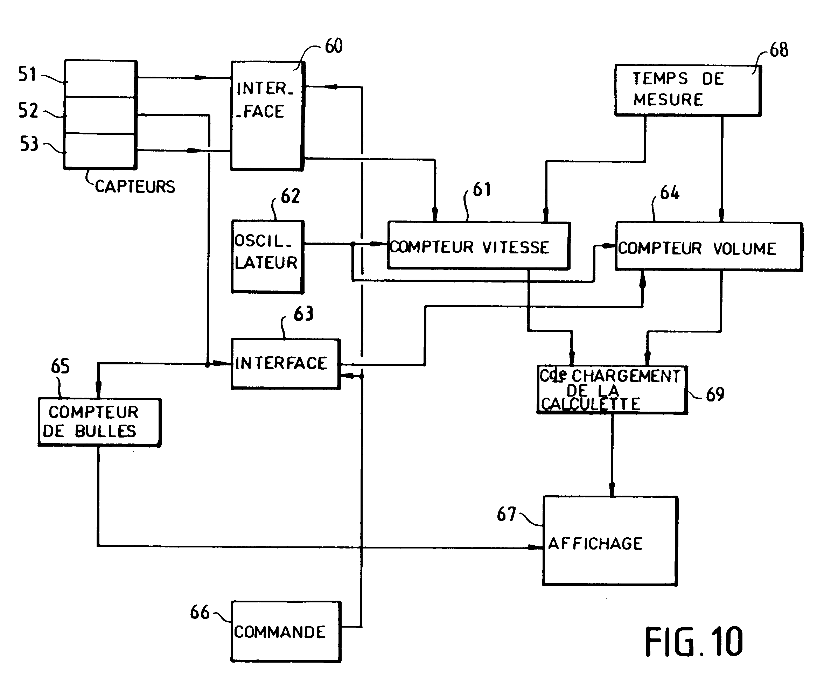

La figure 10 représente le circuit de traitement 6 permettant de mettre en oeuvre le système de la figure 1.

On retrouve, sur cette figure 10, les capteurs 50, 51, 52.

Un circuit de commande 66 permet de déclencher des circuits d'interface de compteurs 60 et 63.

Le circuit 60 sert d'interface entre les capteurs 50, 52 et un compteur 61 appelé compteur de vitesse. Le compteur 61 reçoit par ailleurs des impulsions d'horloge venant d'un oscillateur 62. Il est déclenché par la réception d'une information provenant du capteur 50 lors de la détection d'une bulle et avance alors d'un pas à chaque impulsion d'horloge. Il s'arrête lors de la détection de la même bulle par le capteur 52. Le compteur 61 permet de calculer le temps t4-t1 mentionné précédemment et par suite la vitesse de la bulle.

Le circuit 63 sert d'interface entre le compteur 51 et un compteur 64 appelé compteur de volume. Le compteur 63 reçoit également les impulsions d'horloge. Il est déclenché par le front avant d'une bulle et avance d'un pas à chaque impulsion d'horloge jusqu'à être arrêté par la détection d'un front arrière de la bulle. Le compteur 64 permet ainsi de mesurer le temps t3-t2 mentionné précédemment.

Un circuit 68 de temps de mesure, commandé par des moyens non représentés, détermine le temps de la mesure. A l'issue d'un temps de mesure, il commande le transfert du contenu des compteurs 61 et 64 à un circuit de calcul 69 qui détermine le volume des bulles et les additionne. Le résultat est ensuite transmis à un dispositif d'affichage 67.

De plus, un compteur de bulles 65 est connecté à un capteur (51 par exemple). Il compte les bulles et transmet le nombre de bulles comptées au dispositif d'affichage 67.

Par ailleurs, un circuit de commande de pompe 70 est commandé par le circuit de commande 66 pour commander la circulation du liquide 2 dans le tube 4.

Selon une variante de réalisation, correspondant à la troisième méthode décrite précédemment, ce circuit de commande de pompe arrête la circulation du liquide 2 alors que le boîtier 9 est sous l'entonnoir 3. Le gaz qui s'échappe u boîtier est stocké dans l'entonnoir 3. Le circuit de commande de pompe 70permet ensuite de commander la circulation du fluide 2 dans le tube 4 et le dispositif de l'invention mesure le volume d'une bulle plus importante correspondant à tout le gaz qui s'est accumulé dans l'entonnoir 3.

A titre d'exemple numérique :

. Le comptage a été fait à la vitesse de 1µs. Il n'y a pas eu de limitation du nombre de bulles comptées. Il est donc possible d'augmenter le nombre de compteurs suivant les temps d'essais désirés jusqu'à 3H15 par exemple.

. Pour que les mesures soient possibles la vitesse des bulles doit être inférieure à 360 km/h (limité par le temps de réponse des capteurs), on a alors une précision des mesures de ± 5 % . A une vitesse des bulles de 36 km/h on a une précision 10 fois meilleure (± 0,5 %).

. La commande de fin d'essais peut se faire automatiquement après un temps programmable.

Un tel dispositif a permis d'obtenir :

. Une précision de l'affichage du volume d'air sorti du boîtier ± 5%.

. Un temps de comptage maximum avec uniquement de l'air : 3h15.

. Il est compté le nombre d'impulsions sortant d'une horloge réglable. La fréquence de l'horloge du banc de mesure peut être de 1MHz (1µs), mais cette fréquence peut être réduite ou elle peut être augmenter pour agir sur la précision de la mesure.

Le circuit de calcul a un temps de réponse de l'ordre de 50 ms. Dans un dispositif réalisé, un changement automatique de fréquence en fin d'essais a été prévu pour que les calculs se fassent à une vitesse au moins égale à 50 ms.

Le dispositif de l'invention présente les avantages suivants :

- écartement des capteurs sur le capillaire indifférent ;
- commande automatique de mise en fonctionnement (essais) du banc ;
- le diamètre du capillaire peut être modifié indifféremment ;
- ce dispositif peut être utilisé avec n'importe quel liquide.

Il est bien évident que la description qui précède n'a été fournie qu'à titre d'exemple.

D'autres variantes peuvent être envisagées.

Les exemples numériques n'ont été fournis que pour illustrer la description.

**Revendications**

1. Procédé de test d'étanchéité d'un boîtier, comportant les différentes étapes suivantes :
   - immersion du boîtier (9) dans une cuve (1) de liquide (2) ;
   - aspiration du liquide (2) de la cuve ainsi que des bulles s'échappant du boîtier (9) et circulation de ce liquide et de ces bulles dans un tube (4) de section déterminée ;
   caractérisé en ce qu'il comporte les étapes suivantes :
   - mesure des instants de passage des fronts avant et arrière de chaque bulle en un point du tube ;
   - mesure de la vitesse des bulles véhiculées par le fluide ;
   - détermination du volume de chaque bulle à l'aide de ces instants de passage et de la vitesse des bulles;

2. Procédé selon la revendication 1, caractérisé en ce que la mesure de vitesse des bulles est réalisée par la mesure des instants de passage d'une bulle en deux points différents du tube (4).

3. Procédé selon la revendication 1, caractérisé en ce que la circulation du fluide dans le tube (4) se fait à débit constant ; la vitesse des bulles est donc obtenue à partir de ce débit.

4. Procédé selon la revendication 1, caractérisé en ce qu'il comprend une étape de comptage des bulles et une étape de détermination d'un volume globale de bulles jar multiplication du volume d'une bulle par le nombre de bulles comptées.

5. Procédé selon la revendication 1, caractérisé en ce qu'il comprend une étape de détermination d'un volume global de bulles par addition durant un temps déterminé des volumes des bulles détectées pendant ce temps déterminé.

6. Procédé selon la revendication 1 caractérisé en ce que durant une phase préparatoire de la mesure, l'aspiration du liquide (2) est arrêtée, le gaz s'échappant du boîtier est stockée, puis l'aspiration du liquide (2) est remise en marche, ce qui permet de faire porter la mesure du gaz qui s'est échappé du boîtier à tester, sur une seule bulle de dimension plus importante.

7. Procédé selon la revendication 1, caractérisé en ce qu'il comporte une étape d'échauffement du boîtier (9) lors de son immersion dans le liquide de façon à provoquer une dilatation du gaz contenu dans le boîtier.

8. Procédé selon la revendication 7, caractérisé en ce que l'étape d'échauffement du boîtier (9) est obtenue par échauffement du liquide (2).

9. Dispositif de test d'étanchéité d'un boîtier (7) pour la mise en oeuvre du procédé selon la revendication 1, comportant une cuve (1) contenant un liquide (2) et dans lequel est immergé le boîtier (9) à tester, une hotte (3) possédant une grande ouverture d'aspiration (30) en contact, au moins, avec la surface du liquide, et dont la surface d'aspiration est au moins égale à la projection sur la surface du liquide du boîtier à tester de façon que toute bulle d'air ou de gaz sortant du boîtier soit captée par la hotte, la hotte possédant une ouverture de sortie (31) reliée à un tube d'une section déterminée (4) lequel est muni de moyens (8) permettant d'aspirer le liquide (2) de la cuve (1), caractérisé en ce que le dispositif comprend :
    - en outre au moins un premier capteur (51) disposé le long du tube (4) et permettant de détecter les instant de passage du front avant et du front arrière de chaque bulle ;
    - des moyens de mesure de vitesse des bulles (2) dans le tube (4) ;
    - un circuit de traitement connecté audit premier capteur (51) recevant de celui-ci des informations caractérisant les instants de passage du front avant et du front arrière de chaque bulle, et connecté également aux moyens de mesure de vitesse des bulles (2) et recevant de ceux-ci une information de vitesse de bulle, et déterminant, à partir de ces instants de passage, et de la vitesse de bulle, le volume de chaque bulle.

10. Dispositif selon la revendication 9, caractérisé en ce que les moyens de mesure de vitesse des bulles (2) comportent également au moins un deuxième capteur (50 ou 52) détectant l'instant de passage du front avant ou du front arrière de chaque bulle.

11. Dispositif selon la revendication 9, caractérisé en ce que les moyens permettant d'aspirer le liquide fonctionnent à débit constant et les moyens de mesure de vitesse des bulles (2) comporte un dispositif de mesure de débit.

12. Dispositif selon la revendication 10, caractérisé en ce que :
    - les deux capteurs sont séparés d'une distance déterminée (h) ;
    - le premier et le deuxième capteurs détectent les instants de passage de chaque bulle successivement devant le premier et le deuxième capteurs et transmettent les informations de temps correspondantes au circuit de traitement qui détermine la vitesse de chaque bulle sur la distance (h) séparant les deux capteurs ;
    - l'un des capteurs détecte les instants de passage du front avant puis du front arrière de chaque bulle et transmet les informations de temps correspondantes au circuit de traitement qui détermine la longueur de chaque bulle à partir de ces informations de temps et de la vitesse de chaque bulle et qui, connaissant la section du tube (4) détermine ainsi le volume de chaque bulle ;
    - les circuits de traitement possédant en outre des moyens de comptage de bulles progressant d'un pas à chaque détection d'une bulle par l'un des capteurs.

13. Dispositif selon la revendication 10, caractérisé en ce qu'il comporte un troisième capteur (52) détectant l'instant de passage du front avant ou arrière de chaque bulle et qui assure avec le deuxième capteur le rôle de mesure de la vitesse de chaque bulle.

14. Dispositif selon la revendication 9, caractérisé en ce que le tube (4) est un tube de capillaire de section constante.

**15.** Dispositif selon la revendication 9, caractérisé en ce que la hotte d'aspiration (3) a une forme d'entonnoir, l'ouverture d'aspiration (30) étant la grande ouverture de l'entonnoir,

**16.** Dispositif selon la revendication 9, caractérisé en ce que les moyens d'aspiration aspirent le liquide (2) de la cuve (1) avec un débit constant.

**17.** Dispositif selon la revendication 9, caractérisé en ce que les moyens d'aspiration comportent une pompe (8).

**18.** Dispositif selon la revendication 9, caractérisé en ce que les moyens d'aspiration comportent un système de siphon.

**19.** Dispositif selon la revendication 9, caractérisé en ce qu'il comporte un moyen de chauffage du liquide à une température déterminée.

**20.** Dispositif selon la revendication 9, caractérisé en ce qu'il comporte un panier (7) destiné à recevoir le boîtier (9) et pouvant se déplacer dans la cuve de façon à placer le boîtier (9) sous l'ouverture d'aspiration (30) de la hotte (3).

**21.** Dispositif selon la revendication 20, caractérisé en ce qu'il comporte un dispositif vibreur (10) qui imprime au panier (7) des vibrations.

**22.** Dispositif selon la revendication 9, caractérisé en ce qu'il comporte des moyens pour arrêter la circulation du liquide (2) dans le tube (4) et pour stocker le gaz s'échappant du boîtier dans la hotte (3), puis la remise en marche de la circulation du liquide (2) de façon à mesurer le volume de la bulle correspondant à tout le gaz qui s'est accumulé dans la hotte durant l'arrêt de la circulation du liquide.

## Claims

**1.** Method for testing the tightness of a box, comprising the following various stages:
   - immersion of the box (9) into a vessel (1) of liquid (2);
   - suction of the liquid (2) from the vessel and of the bubbles escaping from the box (9) and flow of this liquid and of these bubbles in a tube (4) of predetermined cross-section;
   characterised in that it comprises the following stages:
   - measurement of the instants at which the front and rear faces of each bubble pass a point in the tube;
   - measurement of the speed of the bubbles conveyed by the fluid;
   - determination of the volume of each bubble by means of these instants of passage and of the bubble speed;

**2.** Method according to Claim 1, characterised in that the measurement of the bubble speed is carried out by measuring the instants at which a bubble passes two different points in the tube (4).

**3.** Method according to Claim 1, characterised in that the fluid flows in the tube (4) at a constant flow rate; the bubble speed is therefore obtained from this flow rate.

**4.** Method according to Claim 1, characterised in that it includes a stage for counting the bubbles and a stage for determining an overall bubble volume by multiplying the volume of one bubble by the number of bubbles counted.

**5.** Method according to Claim 1, characterised in that it includes a stage for determining an overall bubble volume by summing, during a predetermined period, the volumes of the bubbles detected during this predetermined period.

**6.** Method according to Claim 1, characterised in that during a preparatory phase of the measurement, the suction of the liquid (2) is halted, the gas escaping from the box is stored, and the suction of the liquid (2) is then restarted, which makes it possible to apply the measurement of the gas which has escaped from the box to be tested to only one bubble of greater size.

**7.** Method according to Claim 1, characterised in that it comprises a stage for heating the box (9) when it is immersed in the liquid so as to bring about an expansion of the gas contained in the box.

8. Method according to Claim 7, characterised in that the stage for heating the box (9) is carried out by heating the liquid (9).

9. Device for testing the tightness of a box (7) for the implementation of the method according to Claim 1, comprising a vessel (1) containing a liquid (2) and in which the box (9) to be tested is immersed, a hood (3) possessing a large suction opening (30) in contact, at least, with the surface of the liquid, and the suction surface of which is at least equal to the projection onto the surface of the liquid of the box to be tested so that any air bubble or gas bubble emerging from the box is collected by the hood, the hood possessing an outlet opening (31) linked to a tube of predetermined cross-section (4) which tube is provided with means (8) making it possible to suck up the liquid (2) from the vessel (1), characterised in that the device includes:
   - in addition at least one first sensor (51) placed along the tube (4) and making it possible to detect the instants of passage of the front and rear face of each bubble;
   - means for measuring the speed of the bubbles (2) in the tube (4);
   - a processing circuit connected to the said first sensor (51) and receiving, from the latter, data characterising the instants of passage of the front face and rear face of each bubble, and also connected to the means for measuring the speed of the bubbles (2) and receiving, from these means, a data item for the bubble speed, and determining, from these instants of passage, and from the bubble speed, the volume of each bubble.

10. Device according to Claim 9, characterised in that the means for measuring the speed of the bubbles (2) also comprise at least one second sensor (50 or 52) detecting the instant of passage of the front face or of the rear face of each bubble.

11. Device according to Claim 9, characterised in that the means making it possible to suck up the liquid operate at a constant flow rate and the means for measuring the speed of the bubbles (2) comprises a device for measuring the flow rate.

12. Device according to Claim 10, characterised in that:
   - the two sensors are separated by a predetermined distance (h);
   - the first and second sensors detect the instants of passage of each bubble successively in front of the first and second sensors and transmit the corresponding time data to the processing circuit which determines the speed of each bubble over the distance (h) separating the two sensors;
   - one of these sensors detects the instants of passage of the front face and then of the rear face of each bubble and then transmits the corresponding time data to the processing circuit which determines the length of each bubble from these time data and from the speed of each bubble and which, knowing the cross-section of the tube (4), thus determines the volume of each bubble;
   - the processing circuits possessing in addition means for counting bubbles which are incremented by one step each time a bubble is detected by one of the sensors.

13. Device according to Claim 10, characterised in that it comprises a third sensor (52) detecting the instant of passage of the front or rear face of each bubble and which, with the second sensor, fulfils the function of measuring the speed of each bubble.

14. Device according to Claim 9, characterised in that the tube (4) is a capillary tube of constant cross-section.

15. Device according to Claim 9, characterised in that the suction hood (3) is funnel-shaped, the suction opening (30) being the large opening of the funnel.

16. Device according to Claim 9, characterised in that the suction means suck up the liquid (2) from the vessel (1) at a constant flow rate.

17. Device according to Claim 9, characterised in that the suction means comprise a pump (8).

18. Device according to Claim 9, characterised in that the suction means comprise a siphon system.

19. Device according to Claim 9, characterised in that it comprises a means for heating the liquid to a predetermined temperature.

**20.** Device according to Claim 9, characterised in that it comprises a dish (7) intended to receive the box (9) and capable of moving in the vessel so as to place the box (9) under the suction opening (30) of the hood (3).

**21.** Device according to Claim 20, characterised in that it comprises a vibrating device (10) which imparts vibrations to the dish (7).

**22.** Device according to Claim 9, characterised in that it comprises means for halting the flow of the liquid (2) in the tube (4) and for storing the gas escaping from the box in the hood (3), and then the restarting of the flow of the liquid (2) so as to measure the volume of the bubble corresponding to all the gas which has accumulated in the hood while the flow of the liquid was halted.


**Patentansprüche**

**1.** Verfahren zur Leckprüfung eines Gefäßes, das die folgenden unterschiedlichen Verfahrensschritte aufweist:
- Eintauchen des Gefäßes (9) in einen mit Flüssigkeit (2) gefüllten Behälter (1) ,
- Ansaugen der Flüssigkeit (2) aus dem Behälter zusammen mit Blasen, die aus dem Gefäß (9) entweichen, und Umlauf dieser Flüssigkeit und der Blasen in einem Rohr (4) eines gegebenen Querschnitts,

dadurch gekennzeichnet, daß es folgende weitere Verfahrensschritte enthält:
- Messung der Zeitpunkte des Durchgangs der Vorder- und Rückfront jeder Blase an einer Stelle des Rohrs,
- Messung der Geschwindigkeit der in dem Fluid mitgerissenen Blasen,
- Bestimmung des Volumens jeder Blase mit Hilfe der Durchgangszeitpunkte und der Geschwindigkeit der Blasen.

**2.** Verfahren nach Anspruch 1, dadurch gekennzeichnet, daß die Geschwindigkeitsmessung der Blasen aufgrund einer Messung der Durchgangszeitpunkte einer Blase an zwei verschiedenen Stellen des Rohrs (4) erfolgt.

**3.** Verfahren nach Anspruch 1, dadurch gekennzeichnet, daß der Umlauf des Fluids im Rohr (4) mit konstantem Durchsatz erfolgt, sodaß die Geschwindigkeit der Blasen sich aus diesem Durchsatz ergibt.

**4.** Verfahren nach Anspruch 1, dadurch gekennzeichnet, daß ein Verfahrensschritt des Zählens der Blasen und ein Verfahrensschritt der Bestimmung eines Gesamtvolumens von Blasen durch Multiplizierung des Volumens einer Blase mit der Anzahl der gezählten Blasen vorgesehen sind.

**5.** Verfahren nach Anspruch 1, dadurch gekennzeichnet, daß ein Verfahrensschritt der Bestimmung des Gesamtvolumens der Blasen durch Akkumulierung der Volumina der während einer vorbestimmten Zeit erfaßten Blasen vorgesehen ist.

**6.** Verfahren nach Anspruch 1, dadurch gekennzeichnet, daß während einer Vorbereitungsphase der Messung das Ansaugen von Flüssigkeit (2) unterbrochen wird, sodaß das aus dem Gefäß austretende Gas sich sammelt , und daß dann das Ansaugen von Flüssigkeit (2) fortgesetzt wird, sodaß die Messung des aus dem Testgefäß austretenden Gases anhand einer einzigen Blase größerer Abmessungen erfolgt.

**7.** Verfahren nach Anspruch 1, dadurch gekennzeichnet, daß es einen Verfahrensschritt des Erwärmens des Gefäßes (9) während dem Eintauchen des Gefäßes in die Flüssigkeit einschließt, sodaß eine Ausdehnung des in dem Gefäß enthaltenen Gases hervorgerufen wird.

**8.** Verfahren nach Anspruch 7, dadurch gekennzeichnet, daß der Verfahrenschritt des Erwärmens des Gefäßes (9) durch Erwärmen der Flüssigkeit (2) erhalten wird.

**9.** Vorrichtung zur Leckprüfung eines Gefäßes (9) zur Durchführung des Verfahrens gemäß Anspruch 1, mit einem eine Flüssigkeit (2) enthaltendem Behälter (1), in den das Testgefäß (9) eingetaucht wird , und mit einer Haube (3), die eine große Ansaugöffnung (30) zumindest in Kontakt mit der Oberfläche der Flüssigkeit besitzt und deren Ansaugoberfläche mindestens gleich der Projektion des Testgefäßes auf die Oberfläche der Flüssigkeit ist, sodaß alle Luft- oder Gasblasen, die aus dem Gefäß austreten, von der Haube erfaßt werden, wobei die Haube eine Ausgangsöffnung (31) besitzt, die an ein Rohr eines gegebenen Querschnitts (4) angeschlossen ist, welches mit Mitteln (8) zum Ansaugen der Flüssigkeit (2) aus dem Behälter (1) versehen ist, dadurch gekennzeichnet, daß die Vorrichtung weiter aufweist:

- mindestens eine erste Sonde (51), die entlang des Rohrs (4) angeordnet ist und den Zeitpunkt des Durchgangs der Vorderfront und der Rückfront jeder Blase zu erfassen vermag,
- Mittel (61) zur Messung der Geschwindigkeit der Blasen in dem Rohr (4),
- einen Verarbeitungskreis, der mit der ersten Sonde (51) verbunden ist und von dieser Informationen empfängt, die die Zeitpunkte des Durchgangs der Vorder- und Rückfront jeder Blase kennzeichnen, wobei dieser Kreis weiter an die Mittel zur Messung der Geschwindigkeit der Blasen (61) angeschlossen ist und von diesen eine Information über die Blasengeschwindigkeit empfängt sowie ausgehend von diesen Durchgangszeitpunkten und der Blasengeschwindigkeit das Volumen jeder Blase bestimmt.

10. Vorrichtung nach Anspruch 9, dadurch gekennzeichnet, daß die Mittel (61) zur Messung der Geschwindigkeit der Blasen außerdem mindestens eine zweite Sonde (50 oder 52) enthalten, die den Durchgang der Vorderfront oder der Rückfront jeder Blase erfassen.

11. Vorrichtung nach Anspruch 9, dadurch gekennzeichnet, daß die Mittel, die das Ansaugen der Flüssigkeit bewirken, mit konstantem Durchsatz arbeiten und daß die Mittel (61) zur Messung der Geschwindigkeit der Blasen eine Vorrichtung zur Messung des Durchsatzes enthalten.

12. Vorrichtung nach Anspruch 10, dadurch gekennzeichnet, daß
- die beiden Sonden einen vorbestimmten Abstand (h) voneinander besitzen,
- die beiden Sonden die Zeitpunkte des Durchgangs jeder Blase nacheinander vor der ersten und der zweiten Sonde ermitteln und die entsprechenden Zeitinformationen an den Verarbeitungskreis übermitteln, der die Geschwindigkeit jeder Blase entlang des Abstands (h) ermittelt, der die beiden Sonden voneinander trennt,
- eine der Sonden die Durchgangszeitpunkte der Vorderfront und dann der Rückfront jeder Blase erfaßt und die entsprechenden Zeitinfomationen an den Verarbeitungskreis übermittelt, der die Länge jeder Blase ausgehend von diesen Zeitinformationen und der Geschwindigkeit jeder Blase bestimmt und in Kenntnis des Querschnitts des Rohrs (4) so das Volumen jeder Blase ermittelt,
- die Verarbeitungskreise außerdem Blasenzählkreise besitzen, die bei der Erfassung jeder Blase in einer der Sonden um einen Schritt weiter zählen.

13. Vorrichtung nach Anspruch 10, dadurch gekennzeichnet, daß sie eine dritte Sonde (52) aufweist, die den Zeitpunkt des Durchgangs der Vorder- oder Rückfront jeder Blase erfaßt und mit der zweiten Sonde die Funktion der Messung der Geschwindigkeit jeder Blase erfüllt.

14. Vorrichtung nach Anspruch 9, dadurch gekennzeichnet, daß das Rohr (4) ein Kapillarrohr von konstantem Querschnitt ist.

15. Vorrichtung nach Anspruch 9, dadurch gekennzeichnet, daß die Absaughaube (3) eine Trichterform besitzt, wobei die Ansaugöffnung (30) die große Trichteröffnung ist.

16. Vorrichtung nach Anspruch 9, dadurch gekennzeichnet, daß die Ansaugmittel die Flüssigkeit (2) des Behälters (1) mit konstantem Durchsatz ansaugen.

17. Vorrichtung nach Anspruch 9, dadurch gekennzeichnet, daß die Ansaugmittel eine Pumpe (8) enthalten.

18. Vorrichtung nach Anspruch 9, dadurch gekennzeichnet, daß die Ansaugmittel ein Siphonsystem enthalten.

19. Vorrichtung nach Anspruch 9, dadurch gekennzeichnet, daß sie ein Mittel zum Aufheizen der Flüssigkeit auf eine bestimmte Temperatur besitzt.

20. Vorrichtung nach Anspruch 9, dadurch gekennzeichnet, daß sie einen Korb (7) aufweist, der zur Aufnahme des Gefäßes (9) bestimmt ist und in dem Behälter so verschoben werden kann, daß das Gefäß (9) unter der Ansaugöffnung (30) der Haube (3) zu liegen kommt.

21. Vorrichtung nach Anspruch 20, dadurch gekennzeichnet, daß es eine Vibratorvorrichtung (10) enthält, die den Korb (7) in Vibrationen versetzt.

22. Vorrichtung nach Anspruch 9, dadurch gekennzeichnet, daß sie Mittel aufweist, um den Umlauf der Flüssigkeit (2) in dem Rohr (4) zu unterbrechen und um das aus dem Gefäß austretende Gas in der Haube (3) zu sammeln, worauf der Flüssigkeitsumlauf wieder aufgenommen wird, sodaß das Volumen der dem ganzen während der Unterbrechung des Flüssigkeitsumlaufs angesammelten Gas entsprechenden Blase gemessen wird.

# FIG.1

# FIG.3

FIG.2

EP 0 421 858 B1

# FIG.4

# FIG.5

# FIG.6

# FIG.7

# FIG.8

# FIG.9

FIG. 10

EP 0 421 858 B1